(19) **Europäisches Patentamt / European Patent Office / Office européen des brevets**

(11) **EP 4 410 624 B1**

(12) **EUROPEAN PATENT SPECIFICATION**

(45) Date of publication and mention
of the grant of the patent:
**04.03.2026 Bulletin 2026/10**

(21) Application number: **24153439.5**

(22) Date of filing: **23.01.2024**

(51) International Patent Classification (IPC):
***B60W 40/10*** (2012.01)    ***B60W 30/18*** (2012.01)

(52) Cooperative Patent Classification (CPC):
**B60W 40/1005; B60W 30/18072;** B60W 2050/0088;
B60W 2510/101; B60W 2520/10; B60W 2530/10;
B60W 2540/10; B60W 2552/15; B60W 2556/10;
B60W 2720/10

(54) **A METHOD OF MAKING PREDICTIVE ESTIMATES OF THE SPEED OF A MOVING VEHICLE, CORRESPONDING SYSTEM AND COMPUTER PROGRAM PRODUCT**

VERFAHREN ZUR VORAUSSCHAUENDEN SCHÄTZUNG DER GESCHWINDIGKEIT EINES FAHRENDEN FAHRZEUGS, ENTSPRECHENDES SYSTEM UND COMPUTERPROGRAMMPRODUKT

PROCÉDÉ D'ESTIMATION PRÉDICTIVE DE LA VITESSE D'UN VÉHICULE EN MOUVEMENT, SYSTÈME ET PRODUIT DE PROGRAMME INFORMATIQUE CORRESPONDANTS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **31.01.2023 IT 202300001494**

(43) Date of publication of application:
**07.08.2024 Bulletin 2024/32**

(73) Proprietor: **Iveco S.p.A.**
**10156 Torino (IT)**

(72) Inventors:
• **SILVESTRI, Mr. Mauro**
I-10156 Torino (IT)
• **VAGLIO, Mr. Paolo**
I-10156 Torino (IT)

(74) Representative: **Buzzi, Notaro & Antonielli d'Oulx S.p.A.**
**Corso Vittorio Emanuele II, 6**
**10123 Torino (IT)**

(56) References cited:
**EP-A1- 3 275 757        EP-A2- 2 591 967**
**DE-A1- 102018 210 715**

## Description

### Field of the invention

The present invention relates to a method of making predictive estimates of the speed of a moving vehicle, and a related electronic system and computer program product. In particular, predictive estimates can be used to control a predictive cruise control system (Predictive Economic Cruise Control, PECC).

### Prior art

Methods of controlling a predictive cruise control system are known in the art, for example from document US 2016/0016586 A1. The predictive cruise control system disclosed in this document uses the values of some state variables of the vehicle, as well as information about the slope profile of a stretch of road that the vehicle is going to travel on, to control the speed of the vehicle.

Another document of interest in the field is DE 102018210715 A1, which discloses a method for adapting a value of a driving resistance parameter of a plurality of stored values for driving resistance parameters of a motor vehicle using forecast data for a route ahead of the motor vehicle. In order to adapt the driving resistance parameter during a rolling or sailing phase of the motor vehicle, existing forecast data for a driving resistance parameter gradient resistance are used. During the rolling or sailing phase, a current driving speed is recorded at several measuring points and compared with a driving speed predicted for the respective measuring point using the forecast data in order to form a speed difference for the respective measuring point. The determination of the driving resistance is based on the forecast of the vehicle speed during the rolling or sailing phase, since the engine torque is not relevant in this driving situation. The motor vehicle is operated without propulsion. A deviation of the speed difference of a measuring point compared to the speed difference of a previous measuring point is then determined across all measuring points and an average deviation is calculated, which is used to adapt the value of the driving resistance parameter. The mean deviation of the predicted driving speed and the actual driving speed describes the error of the driving resistance value.

Document EP 3275757 A1 is also of interest, and is taken as a model for the preamble of claim 1. It discloses how to update the value of the resistance coefficient of a vehicle based on information about the variation in the vehicle speed during the coasting acquired by a vehicle information acquiring section, and information about the variation in the vehicle speed during the coasting estimated by a coasting estimation section.

Document EP 2591967 A2 is also of interest. It discloses a method for operating a vehicle, wherein a coasting distance of the vehicle is determined as a function of values for a plurality of driving resistance parameters. During a coasting process in which the vehicle slows down from an initial speed to a target speed, a movement of the vehicle is detected at several times. An adapted value is determined for at least one driving resistance parameter of the plurality of driving resistance parameters depending on the detected movement of the vehicle. The adapted value for the at least one driving resistance parameter is used to subsequently determine a further coasting distance starting from a further initial speed to a further target speed. In this way, the agreement between a model or equation used to calculate the coastdown distance and the actual behavior of the vehicle can be improved.

In order to reduce fuel consumption while the vehicle is moving, improved predictive algorithms that allow the speed of the vehicle to be predicted more accurately under certain conditions are desirable.

### Object of the invention

An object of one or more embodiments is to provide a method of making predictive estimates of the speed of a moving vehicle with high accuracy, particularly during the eco-roll and cut-off mode phases of motion, so that a predictive cruise control system can be controlled in order to reduce the fuel consumption of the vehicle.

### Summary of the invention

According to one or more embodiments, such an object can be achieved by a method having the features set forth in claim 1 that follows.

One or more embodiments may relate to a corresponding electronic system according to claim 7, which may be mounted on board a vehicle.

One or more embodiments may relate to a corresponding computer program product according to claim 8. As used herein, the reference to such a computer program product is intended to be equivalent to the reference to a computer-readable medium containing instructions for controlling the processing system for the purpose of coordinating the implementation of the method according to one or more embodiments. The reference to "at least one" processing circuit is intended to highlight the possibility that one or more embodiments are implemented in a modular and/or distributed form:

for example, one or more embodiments may provide for the interaction between multiple electronic control units of the vehicle, such as data detection units (from sensors) and data processing units.

Advantageous embodiments are defined by the dependent claims.

The claims are an integral part of the technical teaching provided herein relating to the embodiments.

Thanks to the aforementioned features, the method according to the invention allows the precision of the predictive estimates of the vehicle speed to be refined during use, making the predictive cruise control system more precise in order to reduce fuel consumption.

Brief description of the figures

Several embodiments will now be described, purely by way of example, with reference to the annexed figures, in which:

- Figure 1 is a scheme exemplary of a vehicle in a certain driving condition;
- Figures 2 to 4 are graphs indicative of possible interpolations of data useful for the predictive calculation of the speed of a moving vehicle, according to one or more embodiments of the present disclosure; and
- Figure 5 is a scheme exemplary of the vehicle motion transmission chain.

Detailed description

One or more specific details are illustrated in the following description, intended to provide an in-depth understanding of exemplary embodiments of this disclosure. The embodiments can be obtained without one or more of the specific details, or other methods, components, materials, etc. In other cases, known structures, materials, or operations are not illustrated or described in detail such that certain aspects of the embodiments are not made unclear.

Reference to "an/one embodiment" in this disclosure is intended to indicate that a particular configuration, structure, or feature described in connection with the embodiment is included in at least one embodiment. Therefore, phrases such as "in an/one embodiment" which may appear in one or more places in this description do not necessarily refer to one and the same embodiment. Furthermore, particular configurations, structures, or features may be combined in any suitable manner in one or more embodiments.

In all figures annexed herein, unless the context indicates otherwise, similar parts or elements are indicated with similar references/numbers and a corresponding description will not be repeated for brevity.

The references used herein are provided merely for convenience and therefore do not define the extent of protection or the scope of the embodiments.

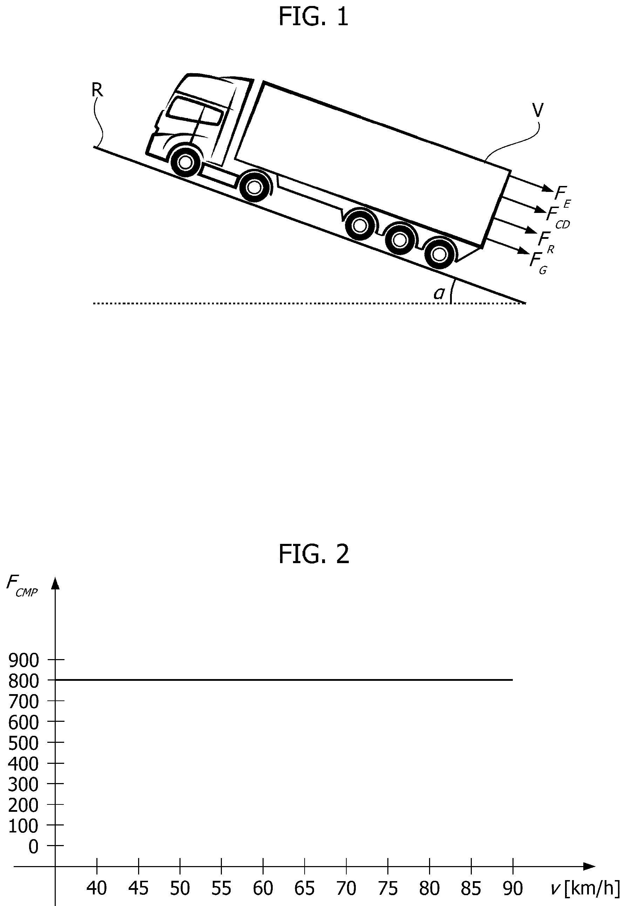

As mentioned, the present invention relates to a method for estimating, in a predictive manner, the speed of a moving vehicle to control a predictive cruise control system of the vehicle in order to reduce fuel consumption, as illustrated in Figure 1 which is exemplary of a vehicle V moving along a road R having a certain slope angle $\alpha$ with respect to the horizontal. In particular, the method concerns the estimate of the vehicle speed during the so-called "eco-roll" and "cut-off" phases.

The eco-roll phases are those where the vehicle is moving by inertia with the transmission in neutral (i.e., with the crank shaft decoupled from the drive shaft), only under the action of external forces such as the braking aerodynamic drag force $F_{CD}$ (which is dependent on the speed of the vehicle), the braking rolling resistance force $F_R$, and the component of the weight force parallel to the road $F_G$ (which can be braking or propulsive depending on whether the vehicle moves uphill or downhill, and more or less influential depending on the road slope), without being influenced by the resistant force $F_E$ due to the friction of the engine and transmission.

The cut-off phases, instead, are those where the vehicle is moving by inertia with an engaged gear but with the accelerator pedal fully released, in such a way that the engine does not deliver torque but on the contrary is dragged into motion by the rotation of the driving wheels. In the cut-off phases, the motion of the vehicle is influenced by the same forces that act during the eco-roll phases (i.e., the aerodynamic drag force $F_{CD}$, the rolling resistance force $F_R$ and the weight force parallel to the road $F_G$), to which is added a resistant force $F_E$ due to the friction of the engine and transmission.

In general, in one or more embodiments the vehicle speed $v_{sim(n)}$ at an instant t = n (future) is estimated predictively starting from the speed $v_{sim(n-1)}$ at a previous instant t = n-1 (present) and adding to this a quantity $\Delta v$ which represents the speed variation that occurred in the time interval $\Delta t$ between the instant t = n-1 and the instant t = n, as indicated in the following equation 1:

$$v_{sim(n)} = v_{sim(n-1)} + \Delta v \qquad (1)$$

In particular, the speed difference $\Delta v$ can be calculated, in the eco-roll phases, according to the following equation 2, where $FR_{E(n-1)}$ is the resulting force that acts on the vehicle V at instant t = n-1, $m$ is the mass of the vehicle V, and $\Delta t$ is the time interval considered (simulation or prediction time interval):

$$\Delta v = -\frac{FR_{E(n-1)}}{m} \cdot \Delta t \qquad (2)$$

In particular, in the eco-roll phases, the resulting force $FR_{E(n-1)}$ is given by the sum of the braking rolling resistance force $F_R$ (equal to the product between the eco-roll rolling resistance coefficient $C_{r,E}$, the mass m of the vehicle and the cosine of the slope angle $\alpha$ of the road), the braking aerodynamic drag force $F_{CD}$ (equal to the product between the coefficient $A_{air}$ and the square of the vehicle speed, in which the coefficient $A_{air}$ depends on the density of the air, the area of the frontal section of the vehicle and its aerodynamic drag coefficient Cx), and the component of the weight force parallel to the road $F_G$ (equal to the product between the mass $m$ of the vehicle, the acceleration of gravity $g$ and the sine of the slope angle $\alpha$ of the road), as indicated in the following equation 3:

$$FR_{E(n-1)} = C_{r,E(n-1)} \cdot m \cdot \cos \alpha_{(n-1)} + A_{air} \cdot v_{sim}{}^2_{(n-1)} + mg \cdot \sin \alpha_{(n-1)}$$

$$(3)$$

In several embodiments, the values of the parameters $C_{r,E}$, $m$, $\alpha$, $A_{air}$, $g$ can be stored in a memory of a vehicle control system, or calculated using known algorithms. For example, a default value of the parameter $C_{r,E}$ can be initially stored in the memory, the value of the mass $m$ can be determined in real time using an estimation algorithm (for example, as described in the Italian patent application No. 102021000026861 filed by the same Applicant, not yet publicly available at the filing date of this application), the value of the road slope $\alpha$ can be detected using a sensor mounted on the vehicle (if it is the current slope), or determined in real time using an estimation algorithm (for example, as described in the Italian patent application No. 102021000026861 cited above), or even obtained from a GPS navigation system (if it concerns the future slope), and the values $A_{air}$ and $g$ can be stored in memory.

Substantially, some embodiments of the present invention relate to an iterative method which allows updating and refining, during use of the vehicle, the value of the parameter $C_{r,E}$ used to make estimates of the future speed of the vehicle during the eco-roll phases. In particular, during each eco-roll phase a predictive estimate of the vehicle speed is performed using equations 1, 2 and 3 to determine an expected value of the vehicle speed at the end of the eco-roll phase. An eco-roll phase can be detected when the vehicle meets the following dynamic conditions: the gear is not engaged (i.e., the vehicle is moving in neutral), no braking system or retarder system of the vehicle is active, and the speed of the vehicle is comprised between a lower threshold value and an upper threshold value. When the vehicle meets these conditions, an eco-roll phase begins (instant t = n-1) and the real speed $v_{real(n-1)}$ detected at that instant (for example, read from a TCO1 or EBC2 signal of the CAN network of the vehicle) is set as the initial speed of the estimate method (i.e., $v_{sim(n-1)}$ in equation 1). If the eco-roll phase is stopped before reaching a certain minimum duration, the eco-roll phase is discarded and the execution of the algorithm stops. This precaution allows to discard the eco-roll phases which last too short and are therefore not significant for updating the parameter $C_{r,E}$ (or even potentially harmful, as they are more subject to transient phenomena). If, instead, the eco-roll phase exceeds the minimum duration, then it is considered "valid" to update the parameter $C_{r,E}$. The eco-roll phase is considered ended when a certain maximum duration is reached, or when the vehicle no longer meets the corresponding dynamic conditions (if this happens before the maximum duration time window finishes). Once an eco-roll phase has ended (the duration of which is indicated here with $\Delta t_E$), the algorithm calculates the value of the speed $v_{sim(n)}$ that is expected at the end of the eco-roll phase using equations 1, 2 and 3, and at the same time performs a new reading of the real speed of the vehicle at the end of the eco-roll phase (for example, again reading this data from the CAN network of the vehicle). By comparing the value of the expected speed $v_{sim(n)}$ with the value of the real speed $v_{real(n)}$ at the end of the eco-roll phase, a new value $C_{r,E,est}$ of the parameter $C_{r,E}$ is calculated, which would have returned, using the equations 1, 2 and 3, the value of the real speed $v_{real(n)}$, according to the following equation 4 (i.e., the value $C_{r,E,est}$ of the parameter $C_{r,E}$ which minimizes - for example eliminates or cancels out - the error between the estimated speed and the real speed is calculated):

$$C_{r,E,est} = C_{r,E(n-1)} - \frac{(v_{real(n)} - v_{sim(n)})}{\Delta t_E} \qquad (4)$$

If this is the first eco-roll phase during the vehicle use session, the value $C_{r,E(n-1)}$ is the default value. If, however, it is a subsequent eco-roll phase (considering that the algorithm can be repeated iteratively during the entire duration of the vehicle journey), the value $C_{r,E(n-1)}$ is the value calculated in the previous iteration. Therefore, at the end of each eco-roll phase the value of the parameter $C_{r,E}$ is updated (i.e., the previously stored value $C_{r,E(n-1)}$ is replaced by a new value $C_{r,E(n)}$)

in order to reduce the error in estimating the vehicle speed, for example according to the following equation 5, where c is a calibration parameter (greater than or equal to 1):

$$C_{r,E(n)} = C_{r,E(n-1)} \cdot \frac{(c-1)}{c} + C_{r,E,est} \cdot \frac{1}{c} \qquad (5)$$

Therefore, the value of parameter $C_{r,E}$ is iteratively updated, using a moving average approach, where each new eco-roll phase is used to calculate a value $C_{r,E,est}$ that contributes to the stored value $C_{r,E}$ depending on the value of the calibration parameter c. For example, if c = 1 the new stored value $C_{r,E(n)}$ is reset at each iteration of the method since $C_{r,E(n)}$ = $C_{r,E,est}$, while as c increases the weight associated with the last calculated value $C_{r,E,est}$ decreases and the weight of the "time series" of previously calculated values increases. In this way, by setting the value of the calibration parameter c, it is possible to limit the effect of each iteration (for example, c can be set so that the parameter $C_{r,E}$ can be updated at each iteration by no more than 15% more or less than the previous value). In addition, it is possible to limit the value of the parameter $C_{r,E}$ so that it falls within a predefined range of plausible values, thus preventing possible errors in the execution of the algorithm from causing the value of the parameter $C_{r,E}$ to diverge. The value of the parameter $C_{r,E}$ can be stored in a memory of a vehicle processing system (for example, an electronic control unit, ECU), such as an EEPROM memory.

As previously mentioned, several subsequent eco-roll phases can be caused by the fact that the dynamic conditions of the vehicle often vary (for example, the driver repeatedly engages and disengages the gear), or by the division of a single, long, continuous eco-roll phase in multiple successive portions (e.g., each lasting a few seconds).

In one or more embodiments, alternatively or in addition to the continuous updating of the value of the parameter $C_{r,E}$ described above, the predictive estimate of the vehicle speed can be improved using a different method, in which the value of the parameter $C_{r,E}$ is kept constant, and a compensation force term is added in equation 3 which is used to estimate the speed according to equation 2. According to this approach, the resulting force $FR_{E(n-1)}$ is then given by the sum of the braking rolling resistance force $F_R$, the braking aerodynamic drag force $F_{CD}$, the component of the weight force parallel to the road $F_G$, and a compensation force $F_{CMP}$, as indicated in the following equation 6:

$$FR_{E(n-1)} = C_{r,E} \cdot m \cdot \cos\alpha_{(n-1)} + A_{air} \cdot v_{sim}^2{}_{(n-1)} + mg \cdot \sin\alpha_{(n-1)} + F_{CMP}$$

$$(6)$$

Also according to this variant, for each eco-roll phase an expected speed value is calculated at the end of the eco-roll phase (i.e., $v_{sim(n)}$), using equations 1, 2 and 6. At the end of each eco-roll phase, instead of updating the value of the parameter $C_{r,E}$ using equations 4 and 5, a value $F_{CMP,est}$ of the compensation force is calculated which would have returned, using equations 1, 2 and 6, the value of the real speed $v_{real(n)}$, according to the following equation 7 (i.e., the value of the compensation force that minimizes - i.e., eliminates or cancels out - the error between the estimated speed and the real speed is calculated):

$$F_{CMP,est} = \frac{(v_{real(n)} - v_{sim(n)})}{\Delta t_E} \cdot m \qquad (7)$$

In addition, the average speed of the vehicle during the respective eco-roll phase is calculated. Unlike the previous version of the method, in which a single value of the parameter $C_{r,E}$ is updated at each eco-roll phase (for example, computing a moving average), in the present case multiple values of the compensation force $F_{CMP}$ are stored and updated, associated with the average or initial speed of the vehicle during each eco-roll phase. Essentially, an array of data is stored in which, a respective value of the compensation force $F_{CMP}^{(v)}$ (where v indicates the corresponding speed) and the number of occurrences $Occ^{(v)}$ associated with it (i.e., the number of times this value has been updated) are associated to discrete speed values (for example, values spaced at intervals of 5 km/h), as exemplified in the following Table I:

| Table I | | | | | | | | | | | |
|---|---|---|---|---|---|---|---|---|---|---|---|
| Vehicle speed [km/h] | 40 | 45 | 50 | 55 | 60 | 65 | 70 | 75 | 80 | 85 | 90 |
| $F_{CMP}$ | $F_{CMP}^{(40)}$ | ... | ... | ... | ... | ... | ... | ... | ... | ... | $F_{CMP}^{(90)}$ |
| Occ | $Occ^{(40)}$ | ... | ... | ... | ... | ... | ... | ... | ... | ... | $Occ^{(90)}$ |

Therefore, at each eco-roll phase, a value of the compensation force $F_{CMP,est}$ according to equation 7 and a corresponding value of average (or initial) speed are calculated. The value of the compensation force $F_{CMP,est}$ can be limited to fall within a predefined range of plausible values, thus preventing possible errors in the execution of the algorithm from causing the value to diverge. At the end of each eco-roll phase, the value of the compensation force corresponding to the speed closest to the calculated average speed, and the corresponding value of occurrences, stored in the array, are updated according to the following equations 8 and 9:

$$F_{CMP(n)}{}^{(v)} = \frac{F_{CMP(n-1)}{}^{(v)} \cdot Occ_{(n-1)}{}^{(v)} + F_{CMP,est}}{Occ_{(n-1)}{}^{(v)} + 1} \qquad (8)$$

$$Occ_{(n)}{}^{(v)} = Occ_{(n-1)}{}^{(v)} + 1 \qquad (9)$$

The occurrence value can be limited to a predefined maximum value.

After a single execution of the algorithm, the array of values can be populated for example as indicated in the following Table II:

| Table II | | | | | | | | | | | |
|---|---|---|---|---|---|---|---|---|---|---|---|
| Vehicle speed [km/h] | 40 | 45 | 50 | 55 | 60 | 65 | 70 | 75 | 80 | 85 | 90 |
| $F_{CMP}$ | 0 | 0 | 0 | 0 | 0 | 800 | 0 | 0 | 0 | 0 | 0 |
| Occ | 0 | 0 | 0 | 0 | 0 | 1 | 0 | 0 | 0 | 0 | 0 |

After further executions of the algorithm, the array of values can be populated for example as indicated in the following Table III:

| Table III | | | | | | | | | | | |
|---|---|---|---|---|---|---|---|---|---|---|---|
| Vehicle speed [km/h] | 40 | 45 | 50 | 55 | 60 | 65 | 70 | 75 | 80 | 85 | 90 |
| $F_{CMP}$ | 0 | 0 | 0 | 0 | 0 | 800 | 0 | 0 | 300 | 0 | 0 |
| Occ | 0 | 0 | 0 | 0 | 0 | 4 | 0 | 0 | 3 | 0 | 0 |

After yet another execution of the algorithm, the array of values can be populated for example as indicated in the following Table IV:

| Table IV | | | | | | | | | | | |
|---|---|---|---|---|---|---|---|---|---|---|---|
| Vehicle speed [km/h] | 40 | 45 | 50 | 55 | 60 | 65 | 70 | 75 | 80 | 85 | 90 |
| $F_{CMP}$ | 0 | 0 | 200 | 0 | 0 | 800 | 0 | 0 | 300 | 0 | 0 |
| Occ | 0 | 0 | 1 | 0 | 0 | 4 | 0 | 0 | 3 | 0 | 0 |

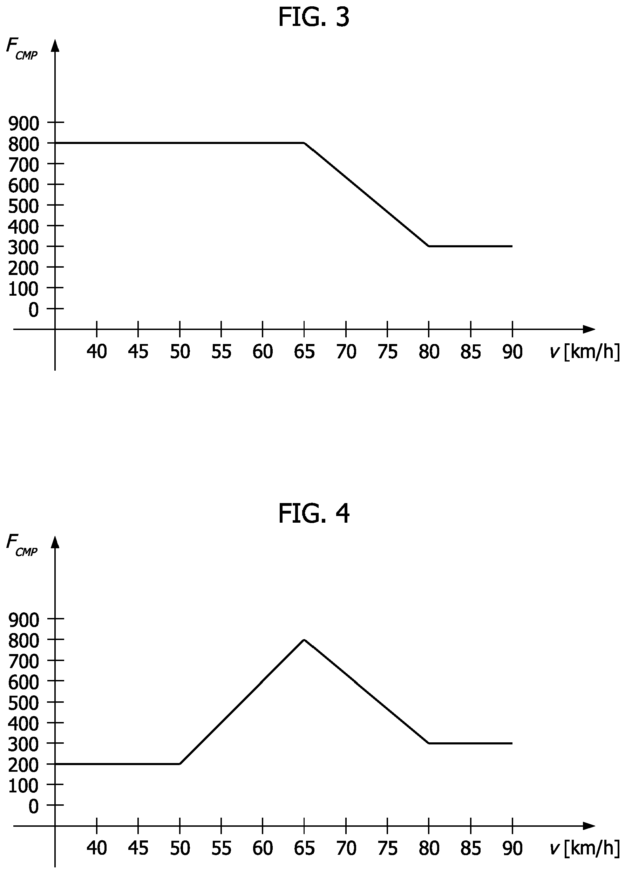

The value of compensation force $F_{CMP}$ stored in the array can be interpolated in order to determine a curve that returns the value of the compensation force as a function of the vehicle speed. This value is used in equations 1, 2 and 6 to make predictive estimates of the vehicle speed in the case of motion in eco-roll mode. For example, figures 2, 3 and 4 represent possible linear interpolation curves of the values represented in Tables II, III and IV, respectively. Of course, other types of interpolation are possible (e.g., polynomial).

It will otherwise be noted that the approach described here in relation to the embodiment in which a compensation force is calculated, i.e., the approach of "diversifying" the corrective term as a function of the speed of the vehicle, could also be applied to the embodiments previously described in which the value of the rolling resistance coefficient is updated, by storing an array of values of the rolling resistance coefficient that depend on the speed of the vehicle. Similarly, in embodiments in which a compensation force is calculated, one could do without "diversifying" the corrective term and calculate a single value of the compensation force, which is updated at each iteration.

Everything that has been previously described in relation to the estimate of the vehicle speed during the eco-roll phases can be applied in a similar way during the cut-off phases, provided that equation 2 is replaced by the following equation 10 in order to also consider the braking force $F_E$ due to engine friction, and that the resulting force $FR_{C(n-1)}$ according to the following equation 11 is used instead of the resulting force $FR_{E(n-1)}$:

$$\Delta v = -\frac{FR_{C(n-1)}+F_{E,(n-1)}\cdot k}{m} \cdot \Delta t \qquad (10)$$

$$FR_{C(n-1)} = C_{r,C(n-1)} \cdot m \cdot \cos \alpha_{(n-1)} + A_{air} \cdot v_{sim(n-1)}^{2} + mg \cdot \sin \alpha_{(n-1)} \qquad (11)$$

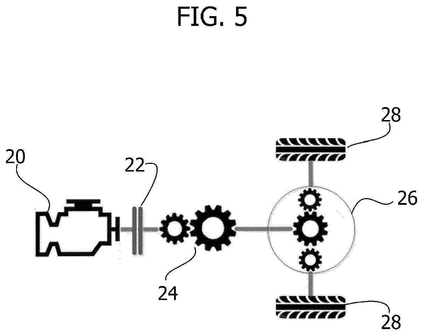

In particular, referring to figure 5, the motion transmission chain of a vehicle can be schematized by an engine 20 having an output shaft coupled to the first disk of a clutch 22. The second disk of the clutch 22 is coupled to the input shaft of a gearbox 24. The output shaft of the gearbox 24 is connected to a differential device 26 located on the axle of the driving wheels. Two output shafts of the differential device 26 (i.e., the axle shafts) are connected to the respective driving wheels 28. The gear ratio of the gearbox 24 is indicated by $g_r$, the gear ratio of the differential 26 is indicated by $a_r$, and the radius of the driving wheels 28 is indicated by r. By definition, the coefficient $k$ present in equation 10 can therefore be calculated according to the following equation 12:

$$k = \frac{g_r \cdot a_r}{r} \qquad (12)$$

The value $g_r$ of the gear ratio of the gearbox can be read from a message available on the CAN network of the vehicle (for example, ETC2.TransmActGr). The ratio $a_r$/r, which is constant, can instead be calculated (only once) as the ratio between the rotation speed of the output shaft of the gearbox 24 and the forward speed of the vehicle, both of these values being readable from available messages on CAN network of the vehicle (respectively, TCO1.TcoOutSpeed and TCO1.TcoVehSpeed), according to the following equation 13:

$$i_C = \frac{a_r}{r} = \frac{TCO1.TcoOutSpeed \cdot 2\pi/60}{TCO1.TcoVehSpeed/3.6} \qquad (13)$$

The value of the braking force $F_E$ due to engine friction depends on the engine rotation speed $s_e$, and can be determined using an analytical function or a set of experimental data (for example, a look-up table) stored in the computing system memory of the vehicle, according to the following definition 14:

$$F_{E,(n-1)} = f(s_{e(n-1)}) \qquad (14)$$

Analogously to what was previously described, in the cut-off phases the resulting force $FR_{C(n-1)}$ is given by the sum of the braking rolling resistance force $F_R$ (equal to the product between the cut-off rolling resistance coefficient $C_{r,C}$, the mass $m$ of the vehicle and the cosine of the slope angle $\alpha$ of the road), the braking aerodynamic drag force $F_{CD}$, and the component of the weight force parallel to the road $F_G$. The values of the parameters $C_{r,C}$, $m$, $\alpha$, $A_{air}$, $g$ can be stored in a memory of a vehicle control system, or calculated using known algorithms.

The iterative method of making predictive estimates of the vehicle speed at the end of a cut-off phase is substantially the same as described previously in relation to the eco-roll phases. Therefore, during each cut-off phase a predictive estimate of the vehicle speed is performed using equations 1, 10 and 11 to determine an expected value of the vehicle speed at the end of the cut-off phase. A cut-off phase can be detected when the vehicle meets the following dynamic conditions: a gear is engaged and no gear shift is in progress, the accelerator pedal is fully released (i.e., the engine is not providing torque), no braking system or retarder system of the vehicle is active, and the speed of the vehicle is between a lower threshold value and an upper threshold value. When the vehicle meets all these conditions, a cut-off phase begins (instant t = n-1) and the real speed $v_{real(n-1)}$ detected at that instant is set as the initial speed of the estimation method (i.e., $v_{sim(n-1)}$ in equation 1). If the cut-off phase ends before reaching a certain minimum duration, the cut-off phase is discarded and the algorithm stops. This precaution allows us to discard cut-off phases that last too short and are therefore not significant for updating the parameter $C_{r,C}$ (or even potentially harmful). If, instead, the cut-off phase exceeds the minimum duration, then it is considered "valid" to update the parameter $C_{r,C}$. The cut-off phase is considered ended when a certain maximum duration is reached, or when the vehicle no longer respects the corresponding dynamic conditions (if this occurs before the maximum duration time window finishes). Once the cut-off phase has ended (the duration of which is indicated here with $\Delta t_C$), the algorithm calculates the value of the speed $v_{sim(n)}$ that is expected at the end of the cut-off phase using equations 1, 10 and 11, and at the same time performs a new reading of the real speed of the vehicle at the end of the cut-off phase. By comparing the value of the expected speed $v_{sim(n)}$ with the value of the real speed $v_{real(n)}$ at the end of the cut-off phase, a new value $C_{r,C,est}$ of the parameter $C_{r,C}$ is calculated which would have returned, using the equations 1, 10 and 11, the value of the real speed $v_{real(n)}$, according to the following equation 15 (i.e., the value $C_{r,C,est}$ of the parameter $C_{r,C}$ which minimizes - for example eliminates or cancels out - the error between the estimated speed and the real speed is calculated):

$$C_{r,C,est} = C_{r,C(n-1)} - \frac{(v_{real(n)} - v_{sim(n)})}{\Delta t_C} \qquad (15)$$

At this point, the value of the parameter $C_{r,C}$ is updated in order to reduce the error in the speed estimate, for example according to the following equation 16, in which $c$ is a calibration parameter (greater than or equal to 1):

$$C_{r,C(n)} = C_{r,C(n-1)} \cdot \frac{(c-1)}{c} + C_{r,C,est} \cdot \frac{1}{c} \qquad (16)$$

Therefore, the value of the parameter $C_{r,C}$ is iteratively updated, using a moving average approach, where each new cut-off phase is used to calculate a value $C_{r,C,est}$ that contributes to the stored value $C_{r,C}$ depending on the value of the calibration parameter $c$. In this way, by setting the value of the calibration parameter $c$, it is possible to limit the effect of each iteration (for example, c can be set so that the parameter $C_{r,C}$ can be updated at each iteration by no more than 15% more or less than the previous value). In addition, it is possible to limit the value of the parameter $C_{r,C}$ so that it falls within a predefined range of plausible values, thus preventing possible errors in the execution of the algorithm from causing the value of the parameter $C_{r,C}$ to diverge. The value of the parameter $C_{r,C}$ can be stored in a memory of a vehicle processing system (for example, an electronic control unit, ECU), such as an EEPROM memory.

As described with reference to the eco-roll phases, in one or more embodiments, as an alternative or in addition to the continuous updating of the value of the parameter $C_{r,C}$ previously described, the predictive estimate of the vehicle speed can be improved using a different method, in which the value of the parameter $C_{r,C}$ is kept constant, and a compensation force term is added in equation 11 which is used to estimate the speed according to equation 10. According to this approach, the resulting force $F_{RC(n-1)}$ is therefore given by the sum of the braking rolling resistance force $F_R$, the braking aerodynamic drag force $F_{CD}$, the component of the weight force parallel to the road $F_G$, and a compensation force $F_{CMP}$, as indicated in the following equation 17:

$$\overline{FR}_{C(n-1)} = C_{r,C} \cdot m \cdot \cos \alpha_{(n-1)} + A_{air} \cdot v_{sim(n-1)}^2 + mg \cdot \sin \alpha_{(n-1)} + F_{CMP}$$

$$(17)$$

Also according to this variant, for each cut-off phase an expected speed value is calculated at the end of the cut-off phase (i.e., $v_{sim(n)}$), using equations 1, 10 and 17. At the end of each cut-off phase, instead of updating the value of the parameter $C_{r,C}$ using equations 15 and 16, a value $F_{CMP,est}$ of the compensation force is calculated which would have returned, using equations 1, 10 and 17, the value of the real speed $v_{real(n)}$, according to the following equation 18 (i.e., the value of the compensation force that minimizes - i.e., eliminates or cancels out - the error between the estimated speed and the real speed is calculated):

$$F_{CMP,est} = \frac{(v_{real(n)} - v_{sim(n)})}{\Delta t_C} \cdot m \qquad (18)$$

In addition, the average speed of the vehicle during the respective cut-off phase is calculated. Multiple values of the compensation force $F_{CMP}$ are stored and updated, in relation to the average or initial speed of the vehicle during each cut-off phase. These values are possibly interpolated and used in equations 1, 10 and 17 in the same way previously discussed for the eco-roll phases.

The method described here can be implemented in an electronic system that comprises: one or more sensors configured to detect one or more parameters indicative of the dynamic state of the vehicle, and/or a GPS locator configured to provide information regarding a stretch of road that the vehicle is travelling (for example, information on the road slope in the next 2 km), and at least one electronic control unit configured to carry out the steps of the method.

Notwithstanding the underlying principles, the details and embodiments may vary considerably from what has been described here only by way of example, without departing from the extent of protection.

The extent of protection is defined by the annexed claims.

**Claims**

1. A method of making predictive estimates of the speed of a moving vehicle (V), comprising:

   i) detecting whether the vehicle (V) is moving in an eco-roll condition, where the vehicle is moving by inertia with the transmission in neutral, or in a cut-off condition, where the vehicle is moving by inertia with an engaged gear and the accelerator pedal fully released;

   ii) in response to the vehicle (V) being moving in an eco-roll or cut-off condition, starting an observation time window and sensing the real initial speed $(v_{real(n-1)})$ of the vehicle at an initial instant of said observation time window;

   iii) in response to the vehicle (V) exiting said eco-roll or cut-off condition, or in response to said observation time window reaching a predefined maximum duration, stopping said observation time window and sensing the real final speed $(v_{real(n)})$ of the vehicle at a final instant of said observation time window;

   iv) computing an estimate of the final speed $(v_{sim(n)})$ of the vehicle at said final instant of said observation time window, as a function of said initial speed $(v_{real(n-1)})$ of the vehicle, a stored value of an estimated resulting force that acts on the vehicle (V) during said observation time window, the mass of the vehicle (V) and the duration of said observation time window; wherein step iv) comprises:

   - estimating a value of a rolling resistance force $(F_R)$ as a function of a rolling resistance coefficient $(C_{r,E}; C_{r,C})$, the mass of the vehicle and the slope of the stretch of road traveled by the vehicle during said observation time window;
   - estimating a value of an aerodynamic drag force $(F_{CD})$ as a function of an aerodynamic drag coefficient of the vehicle and said initial speed $(v_{real(n-1)})$ of the vehicle; and
   - estimating a value of a weight force $(F_G)$ as a function of the mass of the vehicle and the slope of the stretch of road traveled by the vehicle during said observation time window;

   v) computing a second value of said estimated resulting force that acts on the vehicle (V) during said observation time window, wherein said second value of said resulting force minimizes the error between said estimate of the final speed $(v_{sim(n)})$ of the vehicle and said real final speed $(v_{real(n)})$ of the vehicle;

   the method being **<u>characterized in that</u>**:

   step iv) of computing an estimate of the final speed $(v_{sim(n)})$ of the vehicle as a function of said estimated resulting force that acts on the vehicle (V) during said observation time window comprises estimating a value of a compensation force $(F_{CMP})$;
   <u>and in that</u> the method further comprises:

   vi) storing a corrective factor of said estimated resulting force that acts on the vehicle as a function of said second value of the resulting force by storing the value of said compensation force $(F_{CMP})$;

   - iteratively repeating steps i) to vi) and storing a plurality of values of said compensation force $(F_{CMP})$ during respective observation time windows, each value in said plurality of values being valid in the vicinity of a certain vehicle speed;
   - at the end of the iterations of steps i) to vi), computing an estimate of the final speed of the vehicle (V) at the final instant of a further observation time window, as a function of the initial speed of the vehicle in said further observation time window, a stored value of an estimated resulting force that acts on the vehicle (V) during said further observation time window, the mass of the vehicle (V) and the duration of said further observation time window;

   wherein said stored value of the estimated resulting force that acts on the vehicle (V) during said further observation time window comprises a stored value of said compensation force $(F_{CMP})$ valid in the vicinity of the initial or final speed of the vehicle (V) in the further observation time window or in the vicinity of the average speed of the vehicle (V) during the further observation time window.

2. The method of any of the previous claims, wherein step iv) of computing an estimate of the final speed $(v_{sim(n)})$ of the vehicle as a function of said estimated resulting force that acts on the vehicle (V) during said observation time window comprises:

- estimating a value of a rolling resistance force ($F_R$) as a function of a rolling resistance coefficient ($C_{r,E}$; $C_{r,C}$), the mass of the vehicle and the slope of the stretch of road traveled by the vehicle during said observation time window;

- estimating a value of an aerodynamic drag force ($F_{CD}$) as a function of an aerodynamic drag coefficient of the vehicle and said initial speed ($v_{real(n-1)}$) of the vehicle; and

- estimating a value of a weight force ($F_G$) as a function of the mass of the vehicle and the slope of the stretch of road traveled by the vehicle during said observation time window.

3. The method of any of the previous claims, wherein the step of computing an estimate of the final speed of the vehicle (V) at the final instant of said further observation time window comprises interpolating said plurality of values of said compensation force ($F_{CMP}$).

4. The method of any of the previous claims, wherein step i) of detecting whether the vehicle (V) is moving in an eco-roll condition or in a cut-off condition comprises detecting one or more of the following conditions:

- a gear is not engaged, or a gear is engaged and no gear shift is in progress;
- no braking system or retarder system of the vehicle is active;
- the speed of the vehicle is comprised between a lower threshold value and an upper threshold value.

5. The method of any of the previous claims, comprising:

- in response to the vehicle (V) exiting said eco-roll or cut-off condition before said observation time window reaches a predefined minimum duration, stopping said observation time window and resuming the method from step i).

6. The method of any of the previous claims, comprising detecting the slope of the stretch of road traveled by the vehicle during said observation time window via a slope sensor mounted on the vehicle (V) and/or via data received from a GPS navigation system of the vehicle (V).

7. An electronic system for making predictive estimates of the speed of a moving vehicle (V), comprising:

- at least one sensor configured to detect at least one parameter indicative of the dynamic state of the vehicle (V) to detect whether the vehicle (V) is moving in an eco-roll condition, where the vehicle is moving by inertia with the transmission in neutral, or in a cut-off condition, where the vehicle is moving by inertia with an engaged gear and the accelerator pedal fully released; and
- an electronic control unit configured to carry out the steps of the method according to any of the previous claims.

8. A computer program product loadable into a memory of an electronic control unit, and comprising software code instructions that, when executed by the electronic control unit, perform the steps of a method according to any of claims 1 to 6.

**Patentansprüche**

1. Verfahren zum Durchführen vorausschauender Schätzungen der Geschwindigkeit eines fahrenden Fahrzeugs (V), umfassend:

i) Erfassen, ob das Fahrzeug (V) in einem Öko-Roll-Zustand fährt, bei dem das Fahrzeug durch Trägheit mit neutraler Gangschaltung fährt, oder in einem ausgeschalteten Zustand, bei dem das Fahrzeug durch Trägheit mit eingelegtem Gang und vollständig gelöstem Beschleunigungspedal fährt;

ii) als Reaktion darauf, dass das Fahrzeug (V) in einem Öko-Roll- oder ausgeschaltetem Zustand fährt, Starten eines Beobachtungszeitfensters und Abtasten der tatsächlichen Anfangsgeschwindigkeit ($V_{real(n-1)}$) des Fahrzeugs zu einem Anfangszeitpunkt des Beobachtungszeitfensters;

iii) als Reaktion darauf, dass das Fahrzeug (V) den Öko-Roll- oder ausgeschalteten Zustand verlässt, oder als Reaktion darauf, dass das Beobachtungszeitfenster eine vordefinierte Höchstdauer erreicht, Anhalten des Beobachtungszeitfensters und Abtasten der tatsächlichen letzten Geschwindigkeit ($V_{real(n)}$) des Fahrzeugs zu einem letzten Zeitpunkt des Beobachtungszeitfensters;

iv) Berechnen einer Schätzung der letzten Geschwindigkeit ($V_{sim(n)}$) des Fahrzeugs zum letzten Zeitpunkt des Beobachtungszeitfensters als eine Funktion der Anfangsgeschwindigkeit ($V_{real(n-1)}$) des Fahrzeugs, eines gespeicherten Werts einer geschätzten resultierenden Kraft, die auf das Fahrzeug (V) während des Beobachtungszeitfensters einwirkt, der Masse des Fahrzeugs (V) und der Dauer des Beobachtungszeitfensters; wobei Schritt iv) umfasst:

- Schätzen eines Werts einer Rollwiderstandskraft ($F_R$) als eine Funktion eines Rollwiderstandskoeffizienten ($C_{r,E}$; $C_{r,C}$), der Masse des Fahrzeugs und der Neigung der Wegstrecke, die von dem Fahrzeug während des Beobachtungszeitfensters zurückgelegt wird;
- Schätzen eines Werts einer aerodynamischen Zugkraft ($F_{CD}$) als eine Funktion eines aerodynamischen Zugkoeffizienten des Fahrzeugs und der Anfangsgeschwindigkeit ($V_{real(n-1)}$) des Fahrzeugs; und
- Schätzen eines Werts einer Gewichtskraft ($F_G$) als eine Funktion der Masse des Fahrzeugs und der Neigung der Wegstrecke, die von dem Fahrzeug während des Beobachtungszeitfensters zurückgelegt wird;

v) Berechnen eines zweiten Werts der geschätzten resultierenden Kraft, die auf das Fahrzeug (V) während des Beobachtungszeitfensters einwirkt, wobei der zweite Wert der resultierenden Kraft den Fehler zwischen der Schätzung der letzten Geschwindigkeit ($v_{sim(n)}$) des Fahrzeugs und der tatsächlichen letzten Geschwindigkeit ($v_{real(n)}$) des Fahrzeugs minimiert;

wobei das Verfahren **dadurch <u>gekennzeichnet ist, dass</u>**
Schritt iv) des Berechnens einer Schätzung der letzten Geschwindigkeit ($v_{sim(n)}$) des Fahrzeugs als eine Funktion der geschätzten resultierenden Kraft, die auf das Fahrzeug (V) während des Beobachtungszeitfensters einwirkt, Schätzen eines Werts einer Kompensationskraft ($F_{CMP}$) umfasst;
<u>und dass das</u> Verfahren weiter umfasst:
vi) Speichern eines Korrektivfaktors der geschätzten resultierenden Kraft, die auf das Fahrzeug einwirkt, als eine Funktion des zweiten Werts der resultierenden Kraft durch Speichern des Werts der Kompensationskraft ($F_{CMP}$);

- iteratives Wiederholen der Schritte i) bis vi) und Speichern einer Vielzahl von Werten der Kompensationskraft ($F_{CMP}$) während jeweiliger Beobachtungszeitfenster, wobei jeder Wert in der Vielzahl von Werten in der Nähe einer gewissen Fahrzeuggeschwindigkeit gültig ist;
- am Ende der Iterationen der Schritte i) bis iv), Berechnen einer Schätzung der letzten Geschwindigkeit des Fahrzeugs (V) zum letzten Zeitpunkt eines weiteren Beobachtungszeitfensters als eine Funktion der Anfangsgeschwindigkeit des Fahrzeugs im weiteren Beobachtungszeitfenster, eines gespeicherten Werts einer geschätzten resultierenden Kraft, die auf das Fahrzeug (V) während des weiteren Beobachtungszeitfensters einwirkt, der Masse des Fahrzeugs (V) und der Dauer des weiteren Beobachtungszeitfensters;

wobei der gespeicherte Wert der geschätzten resultierenden Kraft, die auf das Fahrzeug (V) während des weiteren Beobachtungszeitfensters einwirkt, einen gespeicherten Wert der Kompensationskraft ($F_{CMP}$) umfasst, der in der Nähe der Anfangsoder letzten Geschwindigkeit des Fahrzeugs (V) im weiteren Beobachtungszeitfenster oder in der Nähe der Durchschnittsgeschwindigkeit des Fahrzeugs (V) während des weiteren Beobachtungszeitfensters gültig ist.

2. Verfahren nach einem der vorstehenden Ansprüche, wobei Schritt iv) des Berechnens einer Schätzung der letzten Geschwindigkeit ($v_{sim(n)}$) des Fahrzeugs als eine Funktion der geschätzten resultierenden Kraft, die auf das Fahrzeug (V) während des Beobachtungszeitfensters einwirkt, umfasst:

- Schätzen eines Werts einer Rollwiderstandskraft ($F_R$) als eine Funktion eines Rollwiderstandskoeffizienten ($C_{r,E}$; $C_{r,C}$), der Masse des Fahrzeugs und der Neigung der Wegstrecke, die von dem Fahrzeug während des Beobachtungszeitfensters zurückgelegt wird;
- Schätzen eines Werts einer aerodynamischen Zugkraft ($F_{CD}$) als eine Funktion eines aerodynamischen Zugkoeffizienten des Fahrzeugs und der Anfangsgeschwindigkeit ($v_{real(n-1)}$) des Fahrzeugs; und
- Schätzen eines Werts einer Gewichtskraft ($F_G$) als eine Funktion der Masse des Fahrzeugs und der Neigung der Wegstrecke, die von dem Fahrzeug während des Beobachtungszeitfensters zurückgelegt wird.

3. Verfahren nach einem der vorstehenden Ansprüche, wobei der Schritt des Berechnens einer Schätzung der letzten Geschwindigkeit des Fahrzeugs (V) zum letzten Zeitpunkt des weiteren Beobachtungszeitfensters Interpolieren der Vielzahl von Werten der Kompensationskraft ($F_{CMP}$) umfasst.

**4.** Verfahren nach einem der vorstehenden Ansprüche, wobei Schritt i) des Erfassens, ob das Fahrzeug (V) in einem Öko-Roll-Zustand oder in einem ausgeschalteten Zustand fährt, Erfassen einer oder mehrerer der folgenden Bedingungen umfasst:

- ein Gang ist nicht eingelegt, oder ein Gang ist eingelegt und keine Gangschaltung erfolgt;
- kein Bremssystem oder Verzögerungssystem des Fahrzeugs ist aktiv;
- die Geschwindigkeit des Fahrzeugs liegt zwischen einem unteren Schwellenwert und einem oberen Schwellenwert.

**5.** Verfahren nach einem der vorstehenden Ansprüche, umfassend:

- als Reaktion darauf, dass das Fahrzeug (V) den Öko-Roll- oder ausgeschalteten Zustand verlässt, bevor das Beobachtungszeitfenster eine vordefinierte Mindestdauer erreicht, Anhalten des Beobachtungszeitfensters und Wiederaufnehmen des Verfahrens ab Schritt i).

**6.** Verfahren nach einem der vorstehenden Ansprüche, umfassend Erfassen der Neigung der Wegstrecke, die das Fahrzeug während des Beobachtungszeitfensters zurücklegt, über einen Neigungssensor, der am Fahrzeug (V) angebracht ist, und/oder über Daten, die von einem GPS-Navigationssystem des Fahrzeugs (V) empfangen werden.

**7.** Elektronisches System zum Durchführen vorausschauender Schätzungen der Geschwindigkeit eines fahrenden Fahrzeugs (V), umfassend:

- mindestens einen Sensor, der konfiguriert ist, um mindestens einen Parameter zu erfassen, der den dynamischen Zustand des Fahrzeugs (V) angibt, um zu erfassen, ob das Fahrzeug (V) in einem Öko-Roll-Zustand fährt, bei dem das Fahrzeug durch Trägheit mit neutraler Gangschaltung fährt, oder in einem ausgeschalteten Zustand, bei dem das Fahrzeug durch Trägheit mit eingelegtem Gang und vollständig gelöstem Beschleunigungspedal fährt, und
- eine elektronische Steuereinheit, die konfiguriert ist, um die Schritte des Verfahrens nach einem der vorstehenden Ansprüche auszuführen.

**8.** Computerprogrammprodukt, das in einen Speicher einer elektronischen Steuereinheit geladen werden kann und Softwarecodeanweisungen umfasst, die, wenn sie von der elektronischen Steuereinheit ausgeführt werden, die Schritte eines Verfahrens nach einem der Ansprüche 1 bis 6 durchführen.

**Revendications**

**1.** Procédé de réalisation d'estimations prédictives de la vitesse d'un véhicule en mouvement (V), comprenant :

i) la détection du fait que le véhicule (V) se déplace dans une condition de roue libre éco, où le véhicule se déplace par inertie avec la transmission au point mort, ou dans une condition de coupure d'injection, où le véhicule se déplace par inertie avec un rapport engagé et la pédale d'accélérateur complètement relâchée ;
ii) en réponse au fait que le véhicule (V) se déplace dans une condition de roue libre éco ou de coupure d'injection, le démarrage d'une fenêtre de temps d'observation et la détection de la vitesse initiale réelle ($v_{real(n-1)}$) du véhicule à un instant initial de ladite fenêtre de temps d'observation ;
iii) en réponse au fait que le véhicule (V) sort de ladite condition de roue libre éco ou de coupure d'injection, ou en réponse au fait que ladite fenêtre de temps d'observation atteint une durée maximale prédéfinie, l'arrêt de ladite fenêtre de temps d'observation et la détection de la vitesse finale réelle ($v_{real(n)}$) du véhicule à un instant final de ladite fenêtre de temps d'observation ;
iv) le calcul d'une estimation de la vitesse finale ($v_{sim(n)}$) du véhicule audit instant final de ladite fenêtre de temps d'observation, en fonction de ladite vitesse initiale ($v_{real(n-1)}$) du véhicule, d'une valeur stockée d'une force résultante estimée qui agit sur le véhicule (V) pendant ladite fenêtre de temps d'observation, de la masse du véhicule (V) et de la durée de ladite fenêtre de temps d'observation ; où l'étape iv) comprend :

- l'estimation d'une valeur d'une force de résistance au roulement ($F_R$) en fonction d'un coefficient de résistance au roulement ($C_{r,E}$, $C_{r,c}$), de la masse du véhicule et de la pente du tronçon de route parcouru par le véhicule pendant ladite fenêtre de temps d'observation ;
- l'estimation d'une valeur d'une force de traînée aérodynamique ($F_{CD}$) en fonction d'un coefficient de traînée aérodynamique du véhicule et de ladite vitesse initiale ($v_{real(n-1)}$) du véhicule ; et
- l'estimation d'une valeur d'une force de poids ($F_G$) en fonction de la masse du véhicule et de la pente du tronçon de route parcouru par le véhicule pendant ladite fenêtre de temps d'observation ;

v) le calcul d'une seconde valeur de ladite force résultante estimée qui agit sur le véhicule (V) pendant ladite fenêtre de temps d'observation, où ladite seconde valeur de ladite force résultante minimise l'erreur entre ladite estimation de la vitesse finale ($v_{sim(n)}$) du véhicule et ladite vitesse finale réelle ($V_{real(n)}$) du véhicule ;

le procédé étant **caractérisé en ce que** :

l'étape iv) de calcul d'une estimation de la vitesse finale ($v_{sim(n)}$) du véhicule en fonction de ladite force résultante estimée qui agit sur le véhicule (V) pendant ladite fenêtre de temps d'observation comprend l'estimation d'une valeur d'une force de compensation ($F_{CMP}$) ;
et **en ce que** le procédé comprend en outre :

vi) le stockage d'un facteur correctif de ladite force résultante estimée qui agit sur le véhicule en fonction de ladite seconde valeur de la force résultante en stockant la valeur de ladite force de compensation ($F_{CMP}$) ;

- la répétition itérative des étapes i) à vi) et le stockage d'une pluralité de valeurs de ladite force de compensation ($F_{CMP}$) pendant des fenêtres de temps d'observation respectives, chaque valeur dans ladite pluralité de valeurs étant valide à proximité d'une certaine vitesse de véhicule ;
- à la fin des itérations des étapes i) à vi), le calcul d'une estimation de la vitesse finale du véhicule (V) à l'instant final d'une fenêtre de temps d'observation supplémentaire, en fonction de la vitesse initiale du véhicule dans ladite fenêtre de temps d'observation supplémentaire, d'une valeur stockée d'une force résultante estimée qui agit sur le véhicule (V) pendant ladite fenêtre de temps d'observation supplémentaire, de la masse du véhicule (V) et de la durée de ladite fenêtre de temps d'observation supplémentaire ;

dans lequel ladite valeur stockée de la force résultante estimée qui agit sur le véhicule (V) pendant ladite fenêtre de temps d'observation supplémentaire comprend une valeur stockée de ladite force de compensation ($F_{CMP}$) valide à proximité de la vitesse initiale ou finale du véhicule (V) dans la fenêtre de temps d'observation supplémentaire ou à proximité de la vitesse moyenne du véhicule (V) pendant la fenêtre de temps d'observation supplémentaire.

2. Procédé selon l'une des revendications précédentes, dans lequel l'étape iv) de calcul d'une estimation de la vitesse finale ($v_{sim(n)}$) du véhicule en fonction de ladite force résultante estimée qui agit sur le véhicule (V) pendant ladite fenêtre de temps d'observation comprend :

- l'estimation d'une valeur d'une force de résistance au roulement ($F_R$) en fonction d'un coefficient de résistance au roulement ($C_{r,E,}$ $C_{r,c}$), de la masse du véhicule et de la pente du tronçon de route parcouru par le véhicule pendant ladite fenêtre de temps d'observation ;
- l'estimation d'une valeur d'une force de traînée aérodynamique ($F_{CD}$) en fonction d'un coefficient de traînée aérodynamique du véhicule et de ladite vitesse initiale ($v_{real(n-1)}$) du véhicule ; et
- l'estimation d'une valeur d'une force de poids ($F_G$) en fonction de la masse du véhicule et de la pente du tronçon de route parcouru par le véhicule pendant ladite fenêtre de temps d'observation.

3. Procédé selon l'une des revendications précédentes, dans lequel l'étape de calcul d'une estimation de la vitesse finale du véhicule (V) à l'instant final de ladite fenêtre de temps d'observation supplémentaire comprend l'interpolation de ladite pluralité de valeurs de ladite force de compensation ($F_{CMP}$).

4. Procédé selon l'une des revendications précédentes, dans lequel l'étape i) de détection du fait que le véhicule (V) se déplace dans une condition de roue libre éco ou dans une condition de coupure d'injection comprend la détection d'une ou de plusieurs des conditions suivantes :

- un rapport n'est pas engagé, ou un rapport est engagé et aucun changement de vitesse n'est en cours ;
- aucun système de freinage ou système de ralentisseur du véhicule n'est actif ;
- la vitesse du véhicule est comprise entre une valeur seuil inférieure et une valeur seuil supérieure.

**5.** Procédé selon l'une des revendications précédentes, comprenant :

- en réponse au fait que le véhicule (V) sort de ladite condition de roue libre éco ou de coupure d'injection avant que ladite fenêtre de temps d'observation n'atteigne une durée minimale prédéfinie, l'arrêt de ladite fenêtre de temps d'observation et la reprise du procédé à partir de l'étape i).

**6.** Procédé selon l'une des revendications précédentes, comprenant la détection de la pente du tronçon de route parcouru par le véhicule pendant ladite fenêtre de temps d'observation via un capteur de pente monté sur le véhicule (V) et/ou via des données reçues d'un système de navigation GPS du véhicule (V).

**7.** Système électronique de réalisation d'estimations prédictives de la vitesse d'un véhicule en mouvement (V), comprenant :

- au moins un capteur configuré pour détecter au moins un paramètre indicatif de l'état dynamique du véhicule (V) pour détecter si le véhicule (V) se déplace dans une condition de roue libre éco, où le véhicule se déplace par inertie avec la transmission au point mort, ou dans une condition de coupure d'injection, où le véhicule se déplace par inertie avec un rapport engagé et la pédale d'accélérateur complètement relâchée ; et
- une unité de commande électronique configurée pour effectuer les étapes du procédé selon l'une des revendications précédentes.

**8.** Produit de programme informatique pouvant être chargé dans une mémoire d'une unité de commande électronique et comprenant des instructions de code de logiciel qui, lorsqu'elles sont exécutées par l'unité de commande électronique, réalisent les étapes d'un procédé selon l'une des revendications 1 à 6.

# FIG. 1

# FIG. 2

## FIG. 3

## FIG. 4

FIG. 5

**EP 4 410 624 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160016586 A1
- DE 102018210715 A1
- EP 3275757 A1
- EP 2591967 A2
- IT 102021000026861